(19)

**Europäisches Patentamt**
**European Patent Office**
**Office européen des brevets**

(11) **EP 4 636 837 A1**

(12) **EUROPEAN PATENT APPLICATION**
published in accordance with Art. 153(4) EPC

(43) Date of publication:
**22.10.2025 Bulletin 2025/43**

(21) Application number: **23934537.4**

(22) Date of filing: **27.04.2023**

(51) International Patent Classification (IPC):
***H01M 4/131*** *(2010.01)*

(52) Cooperative Patent Classification (CPC):
**H01M 4/131; H01M 4/364; H01M 4/366;**
**H01M 4/505; H01M 4/525; H01M 4/5825;**
**H01M 4/625; H01M 10/0525;** Y02E 60/10

(86) International application number:
**PCT/CN2023/091187**

(87) International publication number:
**WO 2024/221340 (31.10.2024 Gazette 2024/44)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Contemporary Amperex Technology**
**Co., Limited**
**Ningde, Fujian 352100 (CN)**

(72) Inventors:
 • **XU, Xiaofu**
  **Ningde, Fujian 352100 (CN)**
 • **PAN, Jianfu**
  **Ningde, Fujian 352100 (CN)**

 • **SHANG, Yibo**
  **Ningde, Fujian 352100 (CN)**
 • **QIN, Yiming**
  **Ningde, Fujian 352100 (CN)**
 • **PEI, Renjie**
  **Ningde, Fujian 352100 (CN)**
 • **YE, Yonghuang**
  **Ningde, Fujian 352100 (CN)**
 • **HE, Jianfu**
  **Ningde, Fujian 352100 (CN)**

(74) Representative: **Ziebig Hengelhaupt Intellectual**
**Property Attorneys**
**Patentanwaltskanzlei PartGmbB**
**Leipziger Straße 49**
**10117 Berlin (DE)**

(54) **POSITIVE ELECTRODE SHEET, BATTERY, AND ELECTRIC DEVICE**

(57) The present application provides a positive electrode sheet, a battery, and an electric device. The positive electrode sheet of the present application comprises a positive electrode current collector and a positive electrode film layer arranged on at least one surface of the positive electrode current collector; the positive electrode film layer comprises a positive electrode active material; the positive electrode active material comprises an element Ni, an element Fe, an element Mn, and an optional element Al; and the positive electrode sheet satisfies the following:

$$0 < C_{Ni}/(C_{Ni} + C_{Fe} + C_{Mn} + C_{Al}) \leq 90.10\%.$$

FIG. 1

**Description**

TECHNICAL FIELD

The present application relates to the technical field of secondary batteries, and in particular, to a positive electrode plate, a battery, and an electric device.

BACKGROUND

In recent years, with the increasingly widespread application of secondary batteries, they have been extensively used in energy storage power systems such as hydropower, thermal power, wind power, and solar power stations, as well as in various fields such as electric tools, electric bicycles, electric motorcycles, electric vehicles, military equipment, and aerospace. As secondary batteries have achieved great development, higher requirements have been placed on their energy density and safety performance.

SUMMARY

The present application is conducted in view of the above issues, and its objective is to provide a positive electrode plate, a battery, and an electric device. The safety performance of the battery can be improved by using the positive electrode plate of the present application.

To achieve the above objective, a first aspect of the present application provides a positive electrode plate, including a positive electrode current collector and a positive electrode film layer disposed on at least one surface of the positive electrode current collector, where the positive electrode film layer includes a positive electrode active material, and the positive electrode active material includes Ni element, Fe element, Mn element, and optional Al element;

and, the positive electrode plate satisfies:

$$0 < C_{Ni}/(C_{Ni} + C_{Fe} + C_{Mn} + C_{Al}) \le 90.10\%,$$

where $C_{Ni}$ is a mass content of Ni element in the positive electrode film layer, $C_{Fe}$ is a mass content of Fe element in the positive electrode film layer, $C_{Mn}$ is a mass content of Mn element in the positive electrode film layer, and $C_{Al}$ is a mass content of Al element in the positive electrode film layer.

Ni element is a factor that negatively affects the safety performance of the battery. In addition, Fe, Mn, and Al elements have the function of improving thermal stability. The present application can improve the safety performance of the battery by controlling the mass proportion of Ni element among Ni, Fe, Mn, and Al elements in the positive electrode film layer within the above range.

In any embodiment, the positive electrode plate satisfies: $2.88\% \le C_{Ni}/(C_{Ni} + C_{Fe} + C_{Mn} + C_{Al}) \le 86.10\%$.

Therefore, the present application enables the battery to have higher energy density and higher safety by controlling the mass proportion of Ni element among Ni, Fe, Mn, and Al elements in the positive electrode film layer within the above range.

In any embodiment, the positive electrode active material includes a first positive electrode active material; the first positive electrode active material includes a compound $LiNi_bCo_dMn_eM_fO_2$, where M includes one or more elements of Mn, Al, Mg, Ca, Na, Ti, W, Zr, Sr, Cr, Zn, Ba, B, S, and Y, and optionally includes Mg element and/or Al element; b is 0.314 to 0.970; d is 0 to 0.320, optionally 0.047 to 0.320; e is 0.006 to 0.390; and a sum of b, d, e, and f is 1 and f is greater than or equal to 0.

In any embodiment, the first positive electrode active material satisfies: $1.65\% \le m \times b \le 79.10\%$, optionally $1.65\% \le m \times b \le 73.87\%$, where m is a mass content of the first positive electrode active material in the positive electrode active material.

Therefore, the positive electrode plate of the present application has higher thermal stability and lower oxygen release amount.

In any embodiment, in the first positive electrode active material, a molar ratio of Al element among elements other than Li element and O element is 0 to 5%, optionally 0.5% to 4%; and/or,

a molar ratio of Mg element among the elements other than Li element and O element is 0 to 3%, optionally 0.5% to 2.0%.

The appropriate doping of Al element and/or Mg element is beneficial to improving the thermal stability of the positive electrode plate of the present application.

In any embodiment, the positive electrode active material further includes a second positive electrode active material; the second positive electrode active material includes a compound $Li_aA_xMn_{1-y}B_yP_{1-z}C_zO_{4-n}D_n$, where A includes one or more elements of Zn, Al, Na, K, Mg, Nb, Mo, and W; B includes one or more elements of Ti, V, Zr, Fe, Ni, Mg, Co, Ga, Sn, Sb, Nb, and Ge; C includes one or more elements of B (boron), S, Si, and N; D includes one or more elements of S, F, Cl, and Br; a is 0.9 to 1.1; x is 0 to 0.1; y is 0.001 to 0.5; z is 0.001 to 0.1; and n is 0 to 0.1.

In any embodiment, the second positive electrode active material includes a core and a shell coating the core, where the core includes the compound $Li_aA_xMn_{1-y}B_yP_{1-z}C_zO_{4-n}D_n$, and the shell includes carbon element.

In any embodiment, the second positive electrode active material includes a core and a shell coating the core, where the shell includes a first coating layer coating the core, a second coating layer coating the first coating layer, and a third coating layer coating the second coating layer; and the core includes the compound $Li_aA_xMn_{1-y}B_yP_{1-z}C_zO_{4-n}D_n$, where the first coating layer includes crystalline pyrophosphate $Li_gEP_2O_7$ and/or $E_h(P_2O_7)_i$; the second coating layer includes crystalline phosphate $X_jPO_4$; and the third coating layer includes carbon element,

where E in crystalline pyrophosphate $Li_gEP_2O_7$ and $E_h(P_2O_7)_i$ each independently includes one or more elements of Fe, Ni, Mg, Co, Cu, Zn, Ti, Ag, Zr, Nb, and Al; X includes one or more elements of Li, Fe, Ni, Mg, Co, Cu, Zn, Ti, Ag, Zr, Nb, and Al; g is greater than 0 and less than or equal to 2; h is greater than 0 and less than or equal to 4; i is greater than 0 and less than or equal to 3; and j is greater than 0 and less than or equal to 3.

In any embodiment, the positive electrode active material consists of the first positive electrode active material and the second positive electrode active material.

Therefore, the present application improves the safety performance of the battery by using the first positive electrode active material and the second positive electrode active material in combination.

A second aspect of the present application further provides a battery, which includes the positive electrode plate according to the first aspect of the present application.

Therefore, the present application can improve the safety performance of the battery by controlling the mass proportion of Ni element among Ni, Fe, Mn, and Al elements in the positive electrode film layer.

In any embodiment, the battery further includes an electrolyte, where the electrolyte includes an electrolyte salt; the battery satisfies: $0 < \rho \times m \times b \leq 79.1\%$, where $\rho$ is a molar concentration of the electrolyte salt in the electrolyte, measured in mol/L; and m is a mass content of the first positive electrode active material in the positive electrode active material.

Therefore, since commonly used electrolyte salts are easy to decompose, the safety of the battery can be further improved by controlling the range of the product of $\rho$, m, and b.

In any embodiment, the electrolyte salt includes one or more of $LiPF_6$, $LiBF_4$, $LiN(SO_2F)_2$, $LiN(CF_3SO_2)_2$, $LiClO_4$, $LiAsF_6$, $LiB(C_2O_4)_2$, and $LiBF_2C_2O_4$, optionally one or more of $LiPF_6$, $LiN(SO_2F)_2$, and $LiN(CF_3SO_2)_2$.

A third aspect of the present application provides an electric device, which includes the battery according to the second aspect of the present application.

BRIEF DESCRIPTION OF THE DRAWINGS

FIG. 1 is a schematic view of a secondary battery according to one embodiment of the present application.

FIG. 2 is an exploded view of the secondary battery according to one embodiment of the present application shown in FIG. 1.

FIG. 3 is a schematic view of a battery module according to one embodiment of the present application.

FIG. 4 is a schematic view of a battery pack according to one embodiment of the present application.

FIG. 5 is an exploded view of the battery pack according to one embodiment of the present application shown in FIG. 4.

FIG. 6 is a schematic view of an electric device using a secondary battery as a power source according to one embodiment of the present application.

Description of the reference numerals:
1: battery pack; 2: upper case body; 3: lower case body; 4: battery module; 5: secondary battery; 51: housing; 52: electrode assembly; 53: top cover assembly.

DETAILED DESCRIPTION

Hereinafter, embodiments of the positive electrode plate, the secondary battery, the battery module, the battery pack, and the electrical device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

[Secondary Battery]

Secondary batteries, also known as rechargeable batteries or storage batteries, refer to batteries that can continue to be used by reactivating their active materials through charging after discharging.

Typically, a secondary battery includes a positive electrode plate, a negative electrode plate, a separator, and an electrolytic solution. During the charging and discharging process of the battery, active ions (such as lithium ions) are intercalated and deintercalated back and forth between the positive electrode plate and the negative electrode plate. The separator is disposed between the positive electrode plate and the negative electrode plate to primarily prevent the positive and negative electrodes from short-circuiting, while allowing the passage of active ions. The electrolytic solution is between the positive electrode plate and the negative electrode plate, and primarily functions to conduct active ions.

[Positive Electrode Plate]

One embodiment of the present application provides a positive electrode plate, which includes a positive electrode current collector and a positive electrode film layer disposed on at least one surface of the positive electrode current collector. The positive electrode film layer includes a positive electrode active material, and the positive electrode active material includes Ni element, Fe element, Mn element, and optional Al element.
and, the positive electrode plate satisfies:

$$0 < C_{Ni}/(C_{Ni} + C_{Fe} + C_{Mn} + C_{Al}) \leq 90.10\%,$$

where $C_{Ni}$ is a mass content of Ni element in the positive electrode film layer, $C_{Fe}$ is a mass content of Fe element in the positive electrode film layer, $C_{Mn}$ is a mass content of Mn element in the positive electrode film layer, and $C_{Al}$ is a mass content of Al element in the positive electrode film layer.

Although the mechanism is not clear, the applicant unexpectedly discovered that: Ni element is a factor that negatively affects the safety performance of the battery. In addition, Fe, Mn, and Al elements have the function of improving thermal stability. The present application can improve the safety performance of the battery by controlling the mass proportion of Ni element among Ni, Fe, Mn, and Al elements in the positive electrode film layer within the above range.

In some embodiments, the positive electrode plate satisfies: $2.88\% \leq C_{Ni}/(C_{Ni} + C_{Fe} + C_{Mn} + C_{Al}) \leq 86.10\%$. For example, $C_{Ni}/(C_{Ni} + C_{Fe} + C_{Mn} + C_{Al})$ is 3%, 4%, 7%, 10%, 12%, 15%, 17%, 20%, 21%, 23%, 25%, 27%, 30%, 35%, 40%, 45%, 50%, 55%, 60%, 65%, 70%, 75%, 77%, 80%, 82%, 85%, 87%, 88%, 90%, and a range consisting of any of the foregoing numerical values.

Therefore, the present application enables the battery to have higher energy density and higher safety by controlling the mass proportion of Ni element among Ni, Fe, Mn, and Al elements in the positive electrode film layer within the above range.

In some embodiments, the positive electrode active material includes a first positive electrode active material. The first positive electrode active material includes a compound $LiNi_bCo_dMn_eM_fO_2$, where M includes one or more elements of Mn, Al, Mg, Ca, Na, Ti, W, Zr, Sr, Cr, Zn, Ba, B, S, and Y, and optionally includes Mg element and/or Al element; b is 0.314 to 0.970, for example, 0.400, 0.500, 0.600, 0.700, 0.800, 0.900, 0.950, and a range consisting of any of the foregoing numerical values; d is 0 to 0.320, optionally 0.047 to 0.320, for example, 0.070, 0.090, 0.100, 0.150, 0.200, 0.250, 0.300, 0.310, 0.320, and a range consisting of any of the foregoing numerical values; e is 0.006 to 0.390, for example, 0.008, 0.010, 0.050, 0.100, 0.150, 0.200, 0.250, 0.300, 0.320, 0.350, 0.370, and a range consisting of any of the foregoing numerical values; and the sum of b, d, e, and f is 1 and f is greater than or equal to 0.

In some embodiments, the first positive electrode active material satisfies: $1.65\% \leq m \times b \leq 79.10\%$, optionally $1.65\% \leq m \times b \leq 73.87\%$. For example, $m \times b$ is 2%, 3%, 5%, 7%, 10%, 15%, 20%, 25%, 30%, 35%, 40%, 50%, 60%, 65%, 70%, 71%, 72%, 73%, 75%, 76%, 78%, and a range consisting of any of the foregoing numerical values, where m is the mass content of the first positive electrode active material in the positive electrode active material.

Therefore, the positive electrode plate of the present application has higher thermal stability and lower oxygen release amount.

In some embodiments, in the first positive electrode active material, the molar ratio of Al element among the elements other than Li element and O element is 0 to 5%, optionally 0.5% to 4%, for example, 0.2%, 0.7%, 1%, 2%, 3%, 4%, 5%, and a range consisting of any of the foregoing numerical values; and/or,

the molar ratio of Mg element among the elements other than Li element and O element is 0 to 3%, optionally 0.5% to 2.0%, for example, 0.2%, 0.4%, 0.7%, 0.9%, 1%, 1.5%, 2%, 2.5%, 2.7%, 3%, and a range consisting of any of the foregoing numerical values.

The appropriate doping of Al element and/or Mg element is beneficial to improving the thermal stability of the positive electrode plate of the present application.

In some embodiments, the positive electrode active material further includes a second positive electrode active material. The second positive electrode active material includes a compound $Li_aA_xMn_{1-y}B_yP_{1-z}C_zO_{4-n}D_n$, where A includes one or more elements of Zn, Al, Na, K, Mg, Nb, Mo, and W; B includes one or more elements of Ti, V, Zr, Fe, Ni, Mg, Co, Ga, Sn, Sb, Nb, and Ge; C includes one or more elements of B (boron), S, Si, and N; D includes one or more elements of S, F, Cl, and Br; a is 0.9 to 1.1; x is 0 to 0.1, for example, 0, 0.02, 0.04, 0.05, 0.07, 0.08, 0.09, 0.1, and a range consisting of any of the foregoing numerical values; y is 0.001 to 0.5, for example, 0.005, 0.01, 0.05, 0.07, 0.1, 0.2, 0.3, 0.4, 0.5, and a range consisting of any of the foregoing numerical values; z is 0.001 to 0.1, for example, 0.001, 0.005, 0.008, 0.01, 0.03, 0.05, 0.07, 0.1, and a range consisting of any of the foregoing numerical values; and n is 0 to 0.1, for example, 0, 0.01, 0.02, 0.05, 0.07, 0.09, 0.1, and a range consisting of any of the foregoing numerical values.

In some embodiments, the second positive electrode active material includes a core and a shell coating the core; the core includes the compound $Li_aA_xMn_{1-y}B_yP_{1-z}C_zO_{4-n}D_n$, and the shell includes carbon element.

In some embodiments, the second positive electrode active material includes a core and a shell coating the core. The shell includes a first coating layer coating the core, a second coating layer coating the first coating layer, and a third coating layer coating the second coating layer. The core includes the compound $Li_aA_xMn_{1-y}B_yP_{1-z}C_zO_{4-n}D_n$. The first coating layer includes crystalline pyrophosphate $Li_gEP_2O_7$ and/or $E_h(P_2O_7)_i$; the second coating layer includes crystalline phosphate $X_jPO_4$; the third coating layer includes carbon element.

E in crystalline pyrophosphate $Li_gEP_2O_7$ and $E_h(P_2O_7)_i$ each independently includes one or more elements of Fe, Ni, Mg, Co, Cu, Zn, Ti, Ag, Zr, Nb, and Al; X includes one or more elements of Li, Fe, Ni, Mg, Co, Cu, Zn, Ti, Ag, Zr, Nb, and Al; g is greater than 0 and less than or equal to 2, for example, 0.1, 0.5, 0.7, 1, 1.3, 1.5, 1.7, 1.9, and a range consisting of any of the foregoing numerical values; h is greater than 0 and less than or equal to 4, for example, 0.1, 0.5, 1, 1.5, 2, 2.5, 3, 3.5, 4, and a range consisting of any of the foregoing numerical values; i is greater than 0 and less than or equal to 3, for example, 0.1, 0.5, 1, 1.5, 2, 2.5, 3, and a range consisting of any of the foregoing numerical values; j is greater than 0 and less than or equal to 3, for example, 0.1, 0.5, 1, 1.5, 2, 2.5, 3, and a range consisting of any of the foregoing numerical values.

In some embodiments, $LiNi_bCo_dMn_eM_fO_2$, $Li_aA_xMn_{1-y}B_yP_{1-z}C_zO_{4-n}D_n$, $Li_gEP_2O_7$, $E_h(P_2O_7)_i$, and $X_jPO_4$ are all electrically neutral.

In some embodiments, the positive electrode active material consists of the first positive electrode active material and the second positive electrode active material.

Therefore, the present application improves the safety performance of the battery by using the first positive electrode active material and the second positive electrode active material in combination.

In some embodiments, a method for preparing the second positive electrode active material of the present application includes the following steps:

Step of providing a core material: the core material includes $Li_aA_xMn_{1-y}B_yP_{1-z}C_zO_{4-n}D_n$, where A includes one or more elements of Zn, Al, Na, K, Mg, Nb, Mo, and W; B includes one or more elements of Ti, V, Zr, Fe, Ni, Mg, Co, Ga, Sn, Sb, Nb, and Ge; C includes one or more elements of B (boron), S, Si, and N; D includes one or more elements of S, F, Cl, and Br; a is 0.9 to 1.1; x is 0 to 0.1; y is 0.001 to 0.5; z is 0.001 to 0.1; and n is 0 to 0.1.

Step of first coating: a first mixture including $Li_gEP_2O_7$ and/or $E_h(P_2O_7)_i$ is provided; the core material and the first mixture are mixed, dried, and sintered to obtain a material coated with the first coating layer. E in crystalline pyrophosphate $Li_gEP_2O_7$ and $E_h(P_2O_7)_i$ each independently includes one or more elements of Fe, Ni, Mg, Co, Cu, Zn, Ti, Ag, Zr, Nb, and Al; g is greater than 0 and less than or equal to 2; h is greater than 0 and less than or equal to 4; i is greater than 0 and less than or equal to 3.

Step of second coating: a second mixture including crystalline phosphate $X_jPO_4$ is provided; the material coated with the first coating layer and the second mixture are mixed, dried, and sintered to obtain a material coated with two coating layers. X includes one or more elements of Li, Fe, Ni, Mg, Co, Cu, Zn, Ti, Ag, Zr, Nb, and Al; j is greater than 0 and less than or equal to 3.

Step of third coating: a third mixture including a carbon source is provided; the material coated with two coating layers and the third mixture are mixed, dried, and sintered to obtain the second positive electrode active material.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector can be formed by forming a metal material (aluminum, aluminum alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, a graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

[Negative Electrode Plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the negative electrode film layer further optionally includes a binder. As an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

[Electrolyte]

The electrolyte conducts ions between the positive electrode plate and the negative electrode plate. The electrolyte may be liquid, gel, or all solid.

In some embodiments, the electrolyte is liquid and includes an electrolyte salt and a solvent.

In some embodiments, the secondary battery satisfies: $0 < \rho \times m \times b \leq 79.1\%$, where $\rho$ is the molar concentration of the electrolyte salt in the electrolyte, measured in mol/L; and m is the mass content of the first positive electrode active material in the positive electrode active material.

Therefore, since commonly used electrolyte salts are easy to decompose, the safety of the battery can be further improved by controlling the range of the product of $\rho$, m, and b.

In some embodiments, the electrolyte salt includes one or more of $LiPF_6$, $LiBF_4$, $LiN(SO_2F)_2$, $LiN(CF_3SO_2)_2$, $LiClO_4$, $LiAsF_6$, $LiB(C_2O_4)_2$, and $LiBF_2C_2O_4$, optionally one or more of $LiPF_6$, $LiN(SO_2F)_2$, and $LiN(CF_3SO_2)_2$, more optionally $LiPF_6$.

In some embodiments, the molar concentration $\rho$ of the electrolyte salt in the electrolyte is 0.5 to 1.5 mol/L, for example, 0.7 mol/L, 0.9 mol/L, 1.0 mol/L, 1.2 mol/L, or 1.4 mol/L.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. As an example, the additive may include a negative electrode film-forming additive, a positive electrode film-forming additive, and may also include an additive capable of improving certain performance of the battery, such as an additive for improving the overcharge performance of the battery, an additive for improving the high- or low-temperature performance of the battery, or the like.

[Separator]

In some embodiments, the secondary battery further includes a separator. The present application does not particularly limit the type of the separator, and any porous-structure separator known to have good chemical stability and mechanical stability may be selected and used.

In some embodiments, the separator may be made of a material selected from at least one of glass fiber, non-woven fabric, polyethylene, polypropylene, and polyvinylidene difluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

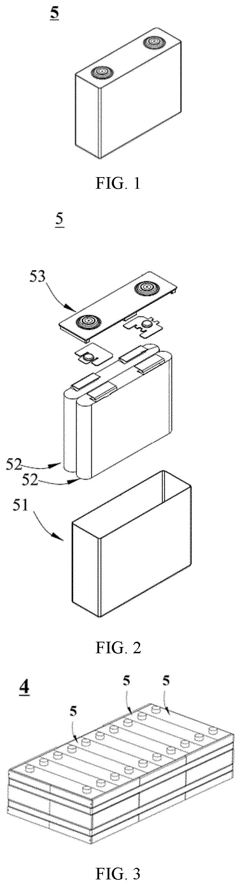

The present application does not particularly limit the shape of the secondary battery, and it may have a cylindrical shape, a prismatic shape, or any other shape. For example, FIG. 1 shows a secondary battery 5 having a prismatic structure as one example.

In some embodiments, referring to FIG. 2, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separator may be subject to a winding process or a stacking process to form an electrode assembly 52. The electrode assembly 52 is packaged in the accommodating cavity. The electrolytic solution is infiltrated into the electrode assembly 52. The number of the electrode assembly 52 included in the secondary battery 5 may be one or more, and those skilled in the art can select the number according to specific and actual needs.

In some embodiments, the secondary battery may be assembled into a battery module. The number of secondary batteries included in the battery module may be one or more, and the specific number may be selected by those skilled in the art based on the use and capacity of the battery module.

FIG. 3 shows a battery module 4 as one example. Referring to FIG. 3, in the battery module 4, a plurality of secondary batteries 5 may be sequentially arranged in a length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

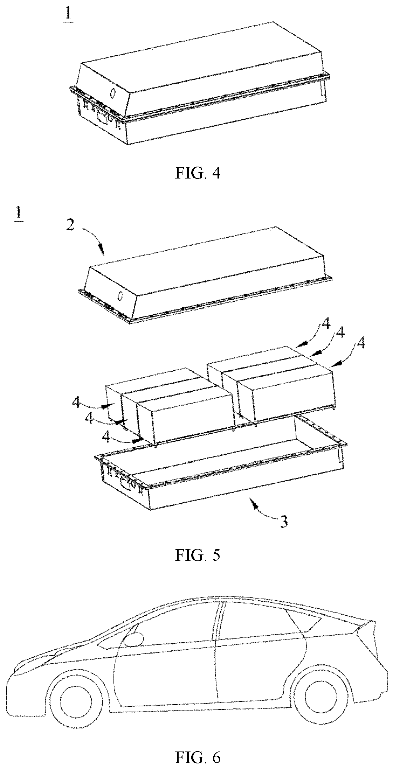

FIG. 4 and FIG. 5 show a battery pack 1 as one example. Referring to FIG. 4 and FIG. 5, the battery pack 1 may include a battery case and a plurality of battery modules 4 arranged in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, the present application further provides an electric device. The electric device includes at least one of the secondary battery, the battery module, or the battery pack according to the present application. The secondary battery, the battery module, or the battery pack can be used as a power source for the electric device, and they can also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery, a battery module, or a battery pack may be selected based on its usage requirements.

FIG. 6 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

[Examples]

Hereinafter, examples of the present application are described. The examples described below are illustrative and are merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

Example 1

1. Preparation of positive electrode plate:

(1) First positive electrode active material:

$LiNi_{0.55}Co_{0.14}1Mn_{0.249}Al_{0.04}Mg_{0.02}O_2$ was purchased from Dynanonic.

(2) Preparation of second positive electrode active material:

### Step S1: Preparation of manganese oxalate co-doped with Fe, Co, V, and S

574.7 g of manganese carbonate, 571.2 g of ferrous carbonate, 3.6 g of nickel carbonate, and 4.9 g of vanadium(II) chloride were added to a mixer and fully mixed for 6 h. The obtained mixture was then transferred into a reaction kettle, and 5 L of deionized water and 1260.6 g of oxalic acid dihydrate were added. The resulting mixture was heated to 80 °C, fully stirred at a rotation speed of 500 rpm for 6 h, and well mixed until the reaction was terminated and no bubbles were generated to obtain a manganese oxalate suspension co-doped with Fe, Co, and V. The suspension was then filtered, dried at 120 °C, and sand-milled to obtain manganese iron vanadium nickel oxalate dihydrate particles with a particle size of 100 nm.

### Step S2: Preparation of core $Li_{0.997}Mn_{0.60}Fe_{0.393}V_{0.004}Co_{0.003}P_{0.997}S_{0.003}O_4$

1794.0 g of prepared manganese iron vanadium nickel oxalate dihydrate, 369.8 g of lithium carbonate, 1148.9 g of ammonium dihydrogen phosphate, and 0.8 g of silicic acid were added to 20 L of deionized water, and the mixture was fully stirred and well mixed for reaction at 80 °C for 10 h to obtain a slurry. The slurry was transferred to a spray drying device for spray drying and granulation, and dried at a temperature of 250 °C to obtain a powder. The powder was sintered in a roller kiln at 700 °C for 4 h under a protective atmosphere (90% nitrogen and 10% hydrogen) to obtain a core material. The element content of the core material was detected by inductively coupled plasma (ICP) optical emission spectroscopy to obtain a core.

### Step S3: Preparation of first coating layer suspension

Preparation of $Li_2FeP_2O_7$ solution: 7.4 g of lithium carbonate, 11.6 g of ferrous carbonate, 23.0 g of ammonium dihydrogen phosphate, and 12.6 g of oxalic acid dihydrate were dissolved in 500 mL of deionized water, and the pH was controlled at 5. The mixture was then stirred and reacted at room temperature for 2 h to obtain a solution, and the solution was warmed to 80 °C and maintained at this temperature for 4 h to obtain a first coating layer suspension.

### Step S4: Coating of first coating layer

1573.0 g of the doped core material obtained in step S2 was added into the first coating layer suspension (the content of the coating substance is 15.7 g) obtained in step S3, and the mixture was fully stirred and mixed for 6 h. After mixing well, the mixture was dried in an oven at 120 °C for 6 h and then sintered at 650 °C for 6 h to obtain a material coated with pyrophosphate.

### Step S5: Preparation of second coating layer suspension

3.7 g of lithium carbonate, 11.6 g of ferrous carbonate, 11.5 g of ammonium dihydrogen phosphate, and 12.6 g of oxalic acid dihydrate were dissolved in 1500 mL of deionized water. The mixture was then stirred and reacted for 6 h to obtain a solution, and the solution was warmed to 120 °C and maintained at this temperature for 6 h to obtain a second coating layer suspension.

### Step S6: Coating of second coating layer

1588.7 g of the material coated with pyrophosphate obtained in step S4 was added into the second coating layer suspension (the content of the coating substance is 47.2 g) obtained in step S5, and the mixture was fully stirred and mixed for 6 h. After mixing well, the mixture was dried in an oven at 120 °C for 6 h and then sintered at 700 °C for 8 h to obtain a material coated with two layers.

**Step S7: Preparation of aqueous third coating layer solution**

37.4 g of sucrose was dissolved in 500 g of deionized water, and the mixture was then stirred for thorough dissolution to obtain an aqueous sucrose solution.

**Step S8: Coating of third coating layer**

1635.9 g of the material coated with two layers obtained in step S6 was added into the sucrose solution obtained in step S7, and the mixture was stirred and mixed for 6 h. After mixing well, the mixture was dried in an oven at 150 °C for 6 h and then sintered at 630 °C for 8 h to obtain a material coated with three layers. The core is $Li_{1.001}Mn_{0.50}Fe_{0.493}V_{0.004}Ni_{0.003}P_{0.999}Si_{0.001}O_4$, the first coating layer is 1% $Li_2FeP_2O_7$ (based on the mass of the core), the second coating layer is 3% $LiFePO_4$ (based on the mass of the core), and the third coating layer is 1% carbon (based on the mass of the core).

(3) Preparation of positive electrode plate:

The first positive electrode active material, the second positive electrode active material, a binder polyvinylidene fluoride (PVDF), and a conductive agent acetylene black were dissolved in a solvent *N*-methylpyrrolidone (NMP) in a mass ratio of 43.2:52.8:2:2. The mixture was fully stirred and well mixed to prepare a positive electrode slurry. The positive electrode slurry was evenly applied on a positive electrode current collector aluminum foil, followed by drying, cold pressing, and cutting to obtain a positive electrode plate.

2. Preparation of negative electrode plate:

A negative electrode active material artificial graphite, a conductive agent acetylene black, a binder styrene-butadiene rubber (SBR), and a thickener sodium carboxymethylcellulose (CMC-Na) were dissolved in deionized water in a mass ratio of 96:2:1:1, and the mixture was fully stirred and well mixed to prepare a negative electrode slurry. The negative electrode slurry was applied on a negative electrode current collector copper foil, followed by drying, cold pressing, and cutting to obtain a negative electrode plate.

3. Separator: A polyethylene microporous film was used as a porous separator substrate. An inorganic aluminum trioxide powder, polyvinylpyrrolidone, and an acetone solvent were well mixed at a weight ratio of 3:1.5:5.5 to prepare a slurry. Both surfaces of the substrate were coated with the slurry, and drying was performed to obtain a separator.

4. Preparation of electrolytic solution:

Ethylene carbonate (EC), ethyl methyl carbonate (EMC), and diethyl carbonate (DEC) were mixed in a volume ratio of 1:1:1, and then $LiPF_6$ was uniformly dissolved in the solution described above to obtain an electrolytic solution. The concentration of $LiPF_6$ in the electrolytic solution is 1 mol/L.

5. Preparation of secondary battery:

The positive electrode plate, the separator, and the negative electrode plate described above were stacked in sequence and wound to obtain an electrode assembly. The electrode assembly was put into an outer packaging, the prepared electrolytic solution was added, and packaging, standing, formation, aging, and other procedures were conducted to give a secondary battery.

The secondary batteries of Examples 2-21 and Comparative Examples 1-2 were prepared using methods similar to that of Example 1, and the different product parameters are detailed in Table 1.

The first positive electrode active materials of Examples 2-3, 6-9, and 11 were the same as the first positive electrode active material of Example 1.

**Method for preparing first positive electrode active materials of Examples 4-5, 10, 16-18, and 21, and Comparative Example 2**

(1) $NiSO_4$, $CoSO_4$, and $MnSO_4$ were added with water in a molar ratio of 0.869:0.048:0.033 to prepare a mixed solution. The concentration of $NiSO_4$ in the mixed solution was 2 mol/L; 6 mol/L NaOH solution was prepared.

(2) 50 L of the mixed solution was introduced into a reaction kettle, and 50 L of the NaOH solution and an appropriate amount of 0.5 mol/L ammonia solution were then introduced into the reaction kettle to adjust the pH value in the reaction kettle to 9.0-12.0; the reaction temperature was 40 °C to 80 °C. The mixture was reacted under stirring at a rotation speed of 300-1000 r/min for 60 h. After the reaction was finished, the precipitate was filtered and washed, and the washed precipitate was dried at 120 °C for 24 h under vacuum to obtain a precursor.

(3) LiOH, the precursor, $Al_2O_3$, and MgO were mixed; the molar ratio of LiOH (based on the molar amount of Li element), the precursor (based on the total molar amount of Ni, Co, and Mn elements in the mixed solution), and $Al_2O_3$ (based on the molar amount of Al element) to MgO is 1.05:0.95:0.04:0.01. After mixing, the mixture was placed in a ball mill jar for ball milling at a rotation speed of 300 r/s for 2 h; then the mixture was placed in a box furnace, and heated to 950 °C and maintained at this temperature for 12 h under an air atmosphere at 0.2 MPa for pre-sintering, with the heating rate of 1 °C/min. The mixture was then cooled to 600 °C at a rate of 1 °C/min and maintained at this temperature for 8 h for sintering. After sintering, the mixture was cooled to 300 °C at a rate of 1 °C/min and naturally cooled to room temperature, then crushed by a jet mill at a rotation speed of 3000 r/min and an air volume of 500 $m^3$/h for 0.5 h, and sieved by using a 500-mesh sieve to obtain a first positive electrode active material $LiNi_{0.869}Co_{0.048}Mn_{0.033}Al_{0.04}Mg_{0.01}O_2$.

## Method for preparing first positive electrode active material of Example 12

(1) $NiSO_4$, $CoSO_4$, and $MnSO_4$ were added with water in a molar ratio of 0.573:0.118:0.2893 to prepare a mixed solution. The concentration of $NiSO_4$ in the mixed solution was 2 mol/L; 5 mol/L NaOH solution was prepared.

(2) 50 L of the mixed solution was introduced into a reaction kettle, and 50 L of the NaOH solution and an appropriate amount of 0.5 mol/L ammonia solution were then introduced into the reaction kettle to adjust the pH value in the reaction kettle to 9.0-12.0; the reaction temperature was 40 °C to 80 °C. The mixture was reacted under stirring at a rotation speed of 300-1000 r/min for 60 h. After the reaction was finished, the precipitate was filtered and washed, and the washed precipitate was dried at 120 °C for 24 h under vacuum to obtain a precursor.

(3) $Li_2CO_3$, the precursor, and MgO were mixed; the molar ratio of $Li_2CO_3$ (based on the molar amount of Li element) and the precursor (based on the total molar amount of Ni, Co, and Mn elements in the mixed solution) to MgO is 1.05:0.98:0.02. After mixing, the mixture was placed in a ball mill jar for ball milling at a rotation speed of 300 r/s for 2 h; then the mixture was placed in a box furnace, and heated to 950 °C and maintained at this temperature for 12 h under an air atmosphere at 0.2 MPa for pre-sintering, with the heating rate of 1 °C/min. The mixture was then cooled to 600 °C at a rate of 1 °C/min and maintained at this temperature for 8 h for sintering. After sintering, the mixture was cooled to 300 °C at a rate of 1 °C/min and naturally cooled to room temperature, then crushed by a jet mill at a rotation speed of 3000 r/min and an air volume of 500 $m^3$/h for 0.5 h, and sieved by using a 500-mesh sieve to obtain a first positive electrode active material $LiNi_{0.573}Co_{0.118}Mn_{0.289}Mg_{0.02}O_2$.

## Method for preparing first positive electrode active material of Example 13

In step (1), $NiSO_4$, $CoSO_4$, and $MnSO_4$ were added with water in a molar ratio of 0.588:0.118:0.289 to prepare a mixed solution. The concentration of $NiSO_4$ in the mixed solution was 2 mol/L; 5 mol/L NaOH solution was prepared.
In step (3), the molar ratio of $Li_2CO_3$ (based on the molar amount of Li element) and the precursor (based on the total molar amount of Ni, Co, and Mn elements in the mixed solution) to MgO is 1.05:0.98:0.05.
The remainder was the same as that in the "Method for preparing first positive electrode active material of Example 12", and a first positive electrode active material $LiNi_{0.588}Co_{0.118}Mn_{0.289}Mg_{0.005}O_2$ was obtained.

## Method for preparing first positive electrode active material of Example 15

(1) $NiSO_4$, $CoSO_4$, and $MnSO_4$ were added with water in a molar ratio of 0.562:0.115:0.283 to prepare a mixed solution. The concentration of $NiSO_4$ in the mixed solution was 2 mol/L; 5 mol/L NaOH solution was prepared.

(2) 50 L of the mixed solution was introduced into a reaction kettle, and 50 L of the NaOH solution and an appropriate amount of 0.5 mol/L ammonia solution were then introduced into the reaction kettle to adjust the pH value in the reaction kettle to 9.0-12.0; the reaction temperature was 40 °C to 80 °C. The mixture was reacted under stirring at a rotation speed of 300-1000 r/min for 60 h. After the reaction was finished, the precipitate was filtered and washed, and the washed precipitate was dried at 120 °C for 24 h under vacuum to obtain a precursor.

(3) $Li_2CO_3$, the precursor, and $Al_2O_3$ were mixed; the molar ratio of $Li_2CO_3$ (based on the molar amount of Li element) and the precursor (based on the total molar amount of Ni, Co, and Mn elements in the mixed solution) to $Al_2O_3$ (based on the molar amount of Al element) is 1.05:0.96:0.04. After mixing, the mixture was placed in a ball mill jar for ball milling at a rotation speed of 300 r/s for 2 h; then the mixture was placed in a box furnace, and heated to 950 °C and maintained at this temperature for 12 h under an air atmosphere at 0.2 MPa for pre-sintering, with the heating rate of 1 °C/min. The mixture was then cooled to 600 °C at a rate of 1 °C/min and maintained at this temperature for 8 h for sintering. After sintering, the mixture was cooled to 300 °C at a rate of 1 °C/min and naturally cooled to room temperature, then crushed by a jet mill at a rotation speed of 3000 r/min and an air volume of 500 $m^3$/h for 0.5 h, and sieved by using a 500-mesh sieve to obtain a first positive electrode active material $LiNi_{0.562}Co_{0.115}Mn_{0.283}Al_{0.04}O_2$.

**Method for preparing first positive electrode active material of Example 14**

In step (1), $NiSO_4$, $CoSO_4$, and $MnSO_4$ were added with water in a molar ratio of 0.597:0.115:0.283 to prepare a mixed solution.
In step (3), the molar ratio of $Li_2CO_3$ (based on the molar amount of Li element) and the precursor (based on the total molar amount of Ni, Co, and Mn elements in the mixed solution) to $Al_2O_3$ is 1.05:0.98:0.05.
The remainder was the same as that in the "Method for preparing first positive electrode active material of Example 15", and a first positive electrode active material $LiNi_{0.597}Co_{0.115}Mn_{0.283}Al_{0.005}O_2$ was obtained.

**Method for preparing first positive electrode active material of Example 19**

(1) $NiSO_4$, $CoSO_4$, and $MnSO_4$ were added with water in a molar ratio of 0.585:0.12:0.295 to prepare a mixed solution. The concentration of $NiSO_4$ in the mixed solution was 2 mol/L; 5 mol/L NaOH solution was prepared.

(2) 50 L of the mixed solution was introduced into a reaction kettle, and 50 L of the NaOH solution and an appropriate amount of 0.5 mol/L ammonia solution were then introduced into the reaction kettle to adjust the pH value in the reaction kettle to 9.0-12.0; the reaction temperature was 40 °C to 80 °C. The mixture was reacted under stirring at a rotation speed of 300-1000 r/min for 60 h. After the reaction was finished, the precipitate was filtered and washed, and the washed precipitate was dried at 120 °C for 24 h under vacuum to obtain a precursor.

(3) $Li_2CO_3$, the precursor, $Al_2O_3$, and MgO were mixed; the molar ratio of $Li_2CO_3$ (based on the molar amount of Li element), the precursor (based on the total molar amount of Ni, Co, and Mn elements in the mixed solution), and $Al_2O_3$ (based on the molar amount of Al element) to MgO is 1.05:1:0.04:0.02. After mixing, the mixture was placed in a ball mill jar for ball milling at a rotation speed of 300 r/s for 2 h; then the mixture was placed in a box furnace, and heated to 950 °C and maintained at this temperature for 12 h under an air atmosphere at 0.2 MPa for pre-sintering, with the heating rate of 1 °C/min. The mixture was then cooled to 600 °C at a rate of 1 °C/min and maintained at this temperature for 8 h for sintering. After sintering, the mixture was cooled to 300 °C at a rate of 1 °C/min and naturally cooled to room temperature, then crushed by a jet mill at a rotation speed of 3000 r/min and an air volume of 500 $m^3$/h for 0.5 h, and sieved by using a 500-mesh sieve to obtain a first positive electrode active material $LiNi_{0.585}Co_{0.12}Mn_{0.295}O_2$.

**Method for preparing first positive electrode active material of Example 20**

In step (1), $NiSO_4$, $CoSO_4$, and $MnSO_4$ were added with water in a molar ratio of 0.522:0.115:0.283 to prepare a mixed solution.
In step (3), the molar ratio of LiOH (based on the molar amount of Li element), the precursor (based on the total molar amount of Ni, Co, and Mn elements in the mixed solution), and $Al_2O_3$ (based on the molar amount of Al element) to MgO is 1.05:0.92:0.05:0.03.
The remainder was the same as that in the method for preparing a first positive electrode active material of Example 4.

Table 1: Parameter results of Examples 1-21 and Comparative Examples 1-2

| Number | First positive electrode active material | | | | | | Second positive electrode active material | | | | $C_{Ni}$ | $C_{Fe}$ | $C_{Mn}$ | $C_{Al}$ | $C_{Ni}/(C_{Ni}+C_{Fe}+C_{Mn}+C_{Al})$ | Electrolyte salt | | $\rho \times m \times b$ |
|---|---|---|---|---|---|---|---|---|---|---|---|---|---|---|---|---|---|---|
| | Compound | m | b | m×b | Molar ratio a of Al element | Molar ratio d of Mg element | Core | First coating layer | Second coating layer | Third coating layer | | | | | | Compound | $\rho$(mol/L) | |
| Example 1 | $LiNi_{0.55}Co_{0.141}Mn_{0.249}Al_{0.04}Mg_{0.02}O_2$ | 45% | 0.55-0 | 24.75-% | 4.0% | 2.0% | $Li_{1.001}Mn_{0.50}Fe_{0.493}V_{0.004}Ni_{0.003}P_{0.999}Si_{0.001}O_4$ | $1\%Li_2Fe-P_2O_7$ | $3\%LiFePO_4$ | 1% carbon | 14.71-% | 9.26% | 15.48-% | 0.49-% | 36.83% | $LiPF_6$ | 1 | 24.75-% |
| Example 2 | $LiNi_{0.55}Co_{0.141}Mn_{0.249}Al_{0.04}Mg_{0.02}O_2$ | 5.3% | 0.55-0 | 2.92% | 4.0% | 2.0% | $Li_{1.001}Mn_{0.50}Fe_{0.493}V_{0.004}Ni_{0.003}P_{0.999}Si_{0.001}O_4$ | $1\%Li_2Fe-P_2O_7$ | $3\%LiFePO_4$ | 1% carbon | 1.73% | 15.95-% | 16.65-% | 0.06-% | 5.04% | $LiPF_6$ | 1 | 2.92% |
| Example 3 | $LiNi_{0.55}Co_{0.141}Mn_{0.249}Al_{0.04}Mg_{0.02}O_2$ | 50% | 0.55-0 | 27.50-% | 4.0% | 2.0% | $Li_{1.001}Mn_{0.50}Fe_{0.493}V_{0.004}Ni_{0.003}P_{0.999}Si_{0.001}O_4$ | $1\%Li_2Fe-P_2O_7$ | $3\%LiFePO_4$ | 1% carbon | 16.35-% | 8.42% | 15.33-% | 0.55-% | 40.22% | $LiPF_6$ | 1 | 27.50-% |
| Example 4 | $LiNi_{0.869}Co_{0.048}Mn_{0.033}Al_{0.04}Mg_{0.01}O_2$ | 50% | 0.86-9 | 43.45-% | 4.0% | 1.0% | $Li_{1.001}Mn_{0.50}Fe_{0.493}V_{0.004}Ni_{0.003}P_{0.999}Si_{0.001}O_4$ | $1\%Li_2Fe-P_2O_7$ | $3\%LiFePO_4$ | 1% carbon | 25.61-% | 8.42% | 9.04% | 0.54-% | 58.72% | $LiPF_6$ | 1 | 43.45-% |
| Example 5 | $LiNi_{0.869}Co_{0.048}Mn_{0.033}Al_{0.04}Mg_{0.01}O_2$ | 83% | 0.86-9 | 72.13-% | 4.0% | 1.0% | $Li_{1.001}Mn_{0.50}Fe_{0.493}V_{0.004}Ni_{0.003}P_{0.999}Si_{0.001}O_4$ | $1\%Li_2Fe-P_2O_7$ | $3\%LiFePO_4$ | 1% carbon | 42.51-% | 2.86% | 3.91% | 0.90-% | 84.71% | $LiPF_6$ | 1 | 72.13-% |
| Example 6 | $LiNi_{0.55}Co_{0.141}Mn_{0.249}Al_{0.04}Mg_{0.02}O_2$ | 3% | 0.55-0 | 1.65% | 4.0% | 2.0% | $Li_{1.001}Mn_{0.50}Fe_{0.493}V_{0.004}Ni_{0.003}P_{0.999}Si_{0.001}O_4$ | $1\%Li_2Fe-P_2O_7$ | $3\%LiFePO_4$ | 1% carbon | 0.98% | 16.34-% | 16.72-% | 0.03-% | 2.88% | $LiPF_6$ | 1 | 1.65% |
| Example 7 | $LiNi_{0.55}Co_{0.141}Mn_{0.249}Al_{0.04}Mg_{0.02}O_2$ | 87% | 0.55-0 | 47.85-% | 4.0% | 2.0% | $Li_{1.001}Mn_{0.50}Fe_{0.493}V_{0.004}Ni_{0.003}P_{0.999}Si_{0.001}O_4$ | $1\%Li_2Fe-P_2O_7$ | $3\%LiFePO_4$ | 1% carbon | 28.45-% | 2.19% | 14.24-% | 0.95-% | 62.07% | $LiPF_6$ | 1 | 47.85-% |
| Example 8 | $LiNi_{0.55}Co_{0.141}Mn_{0.249}Al_{0.04}Mg_{0.02}O_2$ | 3% | 0.55-0 | 1.65% | 4.0% | 2.0% | $Li_{1.001}Mn_{0.50}Fe_{0.493}V_{0.004}Ni_{0.003}P_{0.999}Si_{0.001}O_4$ | $1\%Li_2Fe-P_2O_7$ | $3\%LiFePO_4$ | 1% carbon | 0.98% | 16.33-% | 16.72-% | 0.03-% | 2.88% | $LiPF_6$ | 1 | 1.65% |
| Example 9 | $LiNi_{0.55}Co_{0.141}Mn_{0.249}Al_{0.04}Mg_{0.02}O_2$ | 90% | 0.55-0 | 49.50-% | 4.0% | 2.0% | $Li_{1.001}Mn_{0.50}Fe_{0.493}V_{0.004}Ni_{0.003}P_{0.999}Si_{0.001}O_4$ | $1\%Li_2Fe-P_2O_7$ | $3\%LiFePO_4$ | 1% carbon | 29.43-% | 1.68% | 14.15-% | 0.98-% | 63.63% | $LiPF_6$ | 1 | 49.50-% |

| Number | First positive electrode active material | | | | | | Second positive electrode active material | | | | $C_{Ni}$ | $C_{Fe}$ | $C_{Mn}$ | $C_{Al}$ | $C_{Ni}/(C_{Ni}+C_{Fe}+C_{Mn}+C_{Al})$ | Electrolyte salt | | $\rho \times m \times b$ |
|---|---|---|---|---|---|---|---|---|---|---|---|---|---|---|---|---|---|---|
| | Compound | m | b | m×b | Molar ratio a of Al element | Molar ratio d of Mg element | Core | First coating layer | Second coating layer | Third coating layer | | | | | | Compound | $\rho$(mol/L) | |
| Example 10 | Li-Ni$_{0.869}$Co$_{0.048}$Mn$_{0.033}$Al$_{0.04}$Mg$_{0.01}$O$_2$ | 85% | 0.86-9 | 73.87-% | 4.0% | 1.0% | Li$_{1.001}$Mn$_{0.50}$Fe$_{0.493}$V$_{0.004}$Ni$_{0.003}$P$_{0.999}$Si$_{0.001}$O$_4$ | 1%Li$_2$Fe-P$_2$O$_7$ | 3% LiFe-PO$_4$ | 1% car-bon | 43.53-% | 2.53% | 360% | 0.92-% | 86.07% | LiPF$_6$ | 1 | 73.87-% |
| Example 11 | Li-Ni$_{0.55}$Co$_{0.141}$Mn$_{0.249}$Al$_{0.04}$Mg$_{0.02}$O$_2$ | 100-% | 0.55-0 | 55.00-% | 4.0% | 2.0% | / | / | / | / | 32.69-% | 0 | 13.86-% | 1.09-% | 68.62% | LiPF$_6$ | 1 | 55.00-% |
| Example 12 | Li-Ni$_{0.573}$Co$_{0.118}$Mn$_{0.289}$Mg$_{0.02}$O$_2$ | 50% | 0.57-3 | 28.65-% | 0.0% | 2.0% | Li$_{1.001}$Mn$_{0.50}$Fe$_{0.493}$V$_{0.004}$Ni$_{0.003}$P$_{0.999}$Si$_{0.001}$O$_4$ | 1%Li$_2$Fe-P$_2$O$_7$ | 3% LiFe-PO$_4$ | 1% car-bon | 16.83-% | 8.42% | 16.35-% | 0 | 40.46% | LiPF$_6$ | 1 | 28.65-% |
| Example 13 | Li-Ni$_{0.588}$Co$_{0.118}$Mn$_{0.289}$Mg$_{0.005}$O$_2$ | 50% | 0.58-8 | 29.40-% | 0.0% | 0.5% | Li$_{1.001}$Mn$_{0.50}$Fe$_{0.493}$V$_{0.004}$Ni$_{0.003}$P$_{0.999}$Si$_{0.001}$O$_4$ | 1%Li$_2$Fe-P$_2$O$_7$ | 3% LiFe-PO$_4$ | 1% car-bon | 17.18-% | 8.42% | 16.31-% | 0 | 41.00% | LiPF$_6$ | 1 | 29.40-% |
| Example 14 | Li-Ni$_{0.597}$Co$_{0.115}$Mn$_{0.283}$Al$_{0.005}$O$_2$ | 50% | 0.59-7 | 29.85-% | 0.5% | 0.0% | Li$_{1.001}$Mn$_{0.50}$Fe$_{0.493}$V$_{0.004}$Ni$_{0.003}$P$_{0.999}$Si$_{0.001}$O$_4$ | 1%Li$_2$Fe-P$_2$O$_7$ | 3% LiFe-PO$_4$ | 1% car-bon | 17.44-% | 8.42% | 16.14-% | 0.07-% | 41.45% | LiPF$_6$ | 1 | 29.85-% |
| Example 15 | Li-Ni$_{0.562}$Co$_{0.115}$Mn$_{0.283}$Al$_{0.04}$O$_2$ | 50% | 0.56-2 | 28.10-% | 4.0% | 0.0% | Li$_{1.001}$Mn$_{0.50}$Fe$_{0.493}$V$_{0.004}$Ni$_{0.003}$P$_{0.999}$Si$_{0.001}$O$_4$ | 1%Li$_2$Fe-P$_2$O$_7$ | 3% LiFe-PO$_4$ | 1% car-bon | 16.61-% | 8.42% | 16.23-% | 0.54-% | 39.73% | LiPF$_6$ | 1 | 28.10-% |
| Example 16 | Li-Ni$_{0.869}$Co$_{0.048}$Mn$_{0.033}$Al$_{0.04}$Mg$_{0.01}$O$_2$ | 85% | 0.86-9 | 73.87-% | 4.0% | 1.0% | Li$_{1.001}$Mn$_{0.50}$Fe$_{0.493}$V$_{0.004}$Ni$_{0.003}$P$_{0.999}$Si$_{0.001}$O$_4$ | 1%Li$_2$Fe-P$_2$O$_7$ | 3% LiFe-PO$_4$ | 1% car-bon | 43.53-% | 2.53% | 3.60% | 0.92-% | 86.07% | 70% LiN(CF3SO2)2 | 0.3 | 22.16-% |
| Example 17 | Li-Ni$_{0.869}$Co$_{0.048}$Mn$_{0.033}$Al$_{0.04}$Mg$_{0.01}$O$_2$ | 85% | 0.86-9 | 73.87-% | 4.0% | 1.0% | Li$_{1.001}$Mn$_{0.50}$Fe$_{0.493}$V$_{0.004}$Ni$_{0.003}$P$_{0.999}$Si$_{0.001}$O$_4$ | 1%Li$_2$Fe-P$_2$O$_7$ | 3% LiFe-PO$_4$ | 1% car-bon | 43.53-% | 2.53% | 3.60% | 0.92-% | 86.07% | 50% LiN(CF3SO2)2 | 0.7 | 51.71-% |

(continued)

| Number | First positive electrode active material | | | | | | Second positive electrode active material | | | | $C_{Ni}$ | $C_{Fe}$ | $C_{Mn}$ | $C_{Al}$ | $C_{Ni}/(C_{Ni}+C_{Fe}+C_{Mn}+C_{Al})$ | Electrolyte salt | | $\rho \times m \times b$ |
| | Compound | m | b | m×b | Molar ratio a of Al element | Molar ratio d of Mg element | Core | First coating layer | Second coating layer | Third coating layer | | | | | | Compound | $\rho$(mol/L) | |
|---|---|---|---|---|---|---|---|---|---|---|---|---|---|---|---|---|---|---|
| Example 18 | Li-Ni$_{0.869}$Co$_{0.048}$Mn$_{0.033}$Al$_{0.04}$Mg$_{0.01}$O$_2$ | 91% | 0.86-9 | 79.08-% | 4.0% | 1.0% | Li$_{1.001}$Mn$_{0.50}$Fe$_{0.493}$V$_{0.004}$Ni$_{0.003}$P$_{0.999}$Si$_{0.001}$O$_4$ | 1%Li$_2$Fe-P$_2$O$_7$ | 3% LiFe-PO$_4$ | 1% car-bon | 46.61-% | 1.52% | 2.67% | 0.99-% | 90.02% | LiPF$_6$ | 1 | 79.08-% |
| Example 19 | LiNi0.585Co0.12Mn0.295O2 | 50% | 0.58-5 | 29.25-% | 0.0% | 0.0% | Li$_{1.001}$Mn$_{0.50}$Fe$_{0.493}$V$_{0.004}$Ni$_{0.003}$P$_{0.999}$Si$_{0.001}$O$_4$ | 1%Li$_2$Fe-P$_2$O$_7$ | 3% LiFe-PO$_4$ | 1% car-bon | 17.07-% | 8.42% | 16.46-% | 0.00-% | 40.69% | LiPF$_6$ | 1 | 29.25-% |
| Example 20 | Li-Ni$_{0.522}$Co$_{0.115}$Mn$_{0.283}$Al$_{0.05}$Mg$_{0.03}$O$_2$ | 50% | 0.59-7 | 29.85-% | 5.0% | 3.0% | Li$_{1.001}$Mn$_{0.50}$Fe$_{0.493}$V$_{0.004}$Ni$_{0.003}$P$_{0.999}$Si$_{0.001}$O$_4$ | 1%Li$_2$Fe-P$_2$O$_7$ | 3% LiFe-PO$_4$ | 1% car-bon | 15.65-% | 8.42% | 16.34-% | 0.69-% | 38.07% | LiPF$_6$ | 1 | 29.85-% |
| Example 21 | Li-Ni$_{0.869}$Co$_{0.048}$Mn$_{0.033}$Al$_{0.04}$Mg$_{0.01}$O$_2$ | 95% | 0.86-9 | 82.56-% | 4.0% | 1.0% | Li$_{1.001}$Mn$_{0.50}$Fe$_{0.493}$V$_{0.004}$Ni$_{0.003}$P$_{0.999}$Si$_{0.001}$O$_4$ | 1%Li$_2$Fe-P$_2$O$_7$ | 3% LiFe-PO$_4$ | 1% car-bon | 48.50-% | 0.84% | 2.56% | 1.03-% | 91.63% | LiPF$_6$ | 1 | 82.56-% |
| Comparative Example 1 | / | 0% | / | / | / | / | Li$_{1.001}$Mn$_{0.50}$Fe$_{0.493}$V$_{0.004}$P$_{0.999}$Si$_{0.001}$O$_4$ | 1%Li$_2$Fe-P$_2$O$_7$ | 3% LiFe-PO$_4$ | 1% car-bon | 0.000-% | 16.95-% | 16.71-% | 0.00-% | 0.00% | LiPF$_6$ | 1 | / |
| Comparative Example 2 | Li-Ni$_{0.869}$Co$_{0.048}$Mn$_{0.033}$Al$_{0.04}$Mg$_{0.01}$O$_2$ | 99% | 0.86-9 | 86.03-% | 4.0% | 1.0% | Li$_{1.001}$Mn$_{0.50}$Fe$_{0.493}$V$_{0.004}$Ni$_{0.003}$P$_{0.999}$Si$_{0.001}$O$_4$ | 1%Li$_2$Fe-P$_2$O$_7$ | 3% LiFe-PO$_4$ | 1% car-bon | 50.70-% | 0.17% | 1.42% | 1.07-% | 95.01% | LiPF$_6$ | 1 | 86.03-% |

m represents a mass content of the first positive electrode active material in the positive electrode active material;

a represents a molar ratio of Al element among elements other than Li and O in the first positive electrode active material;

d represents a molar ratio of Mg element among elements other than Li and O in the first positive electrode active material;

The mass ratio of the first coating layer, the second coating layer, and the third coating layer is calculated based on the mass of the core.

**Battery Test**

(1) Energy density test:

Under a constant temperature environment of 25 °C, the battery was left to stand for 10 min and discharged at a constant current of 0.33 C to a cut-off voltage of 2.8 V, and then left to stand for 10 min and charged at a constant current of 0.33 C to a target voltage of 4.3 V. Then, constant voltage charging was performed until the current ≤ 0.05 C. After standing for 10 min, the battery was discharged at a constant current of 0.33 C to a cut-off voltage of 2.8 V. The discharge capacity was recorded, and the specific capacity of the positive electrode active material was calculated by dividing the discharge capacity by the total mass of the positive electrode active material, measured in mAh/g.

(2) Oven safety test:

The test refers to the "Heating" section of the safety test in GB 38031-2020 and explores the upper limit boundary. The optimized test conditions are as follows:

① Pre-preparation:
Testing conditions: An explosion-proof oven was prepared, which could heat and had a line connection port. The test cell was a fresh bare cell (the number of cycles ≤ 10 times), and temperature-sensing lines were pasted at positions such as the periphery of the cell, post terminals, and the like for monitoring the temperature monitoring. Meanwhile, the temperature recording device was provided.
Pre-test cell treatment: Constant current charging was performed at a rate of 0.33 C, and the cell was fully charged to the nominal voltage (for example, the voltage is 4.3 V in the present disclosure).

② Testing process: The sample was placed in a high-temperature oven, and heated from room temperature to 100 °C at 5 °C/min and maintained for 2 h. Then the sample was heated at 5 °C/min and maintained for 30 min every 5 °C. The heating was stopped until the runaway of the cell occurred (the runaway standard: voltage drops by ≥ 50% within 1 min, or cell temperature increases by ≥ 50% within 1 min) or the temperature reached 200 °C.

③ Data processing: The failure point was found according to the above conditions, and corresponding heat preservation temperature and heat preservation time were obtained, denoted as: time @ temperature, e.g., 21 min @ 150 °C.

④ Results comparison:

The safety of samples that underwent a longer duration in the test process was higher. Samples tested for a longer duration may be: samples with the same failure point temperature but longer duration, samples with the same failure point time but higher temperature, and samples with different failure point temperature and time but with higher temperature.

Table 2: Performance test results of Examples 1-21 and Comparative Examples 1-2

| Number | Specific capacity (mAh/g) | Oven safety test results |
|---|---|---|
| Example 1 | 151 | 160°C @15min |
| Example 2 | 140 | 200°C @30min |
| Example 3 | 155 | 185°C @15min |
| Example 4 | 175 | 150°C @10min |
| Example 5 | 192 | 135°C @30min |
| Example 6 | 136 | 200°C @30min |
| Example 7 | 166 | 155°C @30min |
| Example 8 | 136 | 200°C @30min |
| Example 9 | 164 | 150°C @20min |
| Example 10 | 201 | 140°C @15min |
| Example 11 | 170 | 160°C @10min |

(continued)

| Number | Specific capacity (mAh/g) | Oven safety test results |
|---|---|---|
| Example 12 | 160 | 155°C @20min |
| Example 13 | 155 | 145°C @12min |
| Example 14 | 156 | 145°C @15min |
| Example 15 | 161 | 155°C @18min |
| Example 16 | 200 | 180°C @10min |
| Example 17 | 201 | 160°C @30min |
| Example 18 | 195 | 130°C @30min |
| Example 19 | 153 | 135°C @28min |
| Example 20 | 143 | 155°C @15min |
| Example 21 | 196 | 135°C @12min |
| Comparative Example 1 | 135 | 200°C @30min |
| Comparative Example 2 | 200 | 130°C @10min |

According to the results described above, it can be seen that:
Compared with Comparative Examples 1-2, the batteries of Examples 1-21 of the present application had higher energy density and higher safety.

Compared with Examples 18, 19, and 21, the batteries of Examples 1-17 of the present application had higher safety.

Compared with Example 20, the batteries of Examples 1, 3-5, 7, and 9-17 of the present application had higher specific capacity and higher energy density.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

**Claims**

1. A positive electrode plate, comprising a positive electrode current collector and a positive electrode film layer disposed on at least one surface of the positive electrode current collector, wherein the positive electrode film layer comprises a positive electrode active material, and the positive electrode active material comprises Ni element, Fe element, Mn element, and optional Al element;

   and, the positive electrode plate satisfies:

   $$0 < C_{Ni}/(C_{Ni} + C_{Fe} + C_{Mn} + C_{Al}) \leq 90.10\%,$$

   wherein $C_{Ni}$ is a mass content of Ni element in the positive electrode film layer, $C_{Fe}$ is a mass content of Fe element in the positive electrode film layer, $C_{Mn}$ is a mass content of Mn element in the positive electrode film layer, and $C_{Al}$ is a mass content of Al element in the positive electrode film layer.

2. The positive electrode plate according to claim 1, wherein the positive electrode plate satisfies:

   $$2.88\% \leq C_{Ni}/(C_{Ni} + C_{Fe} + C_{Mn} + C_{Al}) \leq 86.10\%.$$

3. The positive electrode plate according to claim 1 or 2, wherein the positive electrode active material comprises a first positive electrode active material; and the first positive electrode active material comprises a compound $LiNi_bCo_dMn_eM_fO_2$, wherein M comprises one or more elements of Mn, Al, Mg, Ca, Na, Ti, W, Zr, Sr, Cr, Zn, Ba, B, S, and Y, and optionally comprises Mg element and/or Al element; b is 0.314 to 0.970; d is 0 to 0.320, optionally 0.047 to 0.320; e is 0.006 to 0.390; and a sum of b, d, e, and f is 1 and f is greater than or equal to 0.

4. The positive electrode plate according to claim 3, wherein the first positive electrode active material satisfies: $1.65\% \leq m \times b \leq 79.10\%$, optionally $1.65\% \leq m \times b \leq 73.87\%$, wherein m is a mass content of the first positive electrode active material in the positive electrode active material.

5. The positive electrode plate according to claim 3 or 4, wherein in the first positive electrode active material, a molar ratio of Al element among elements other than Li element and O element is 0 to 5%, optionally 0.5% to 4%; and/or, a molar ratio of Mg element among the elements other than Li element and O element is 0 to 3%, optionally 0.5% to 2.0%.

6. The positive electrode plate according to any one of claims 3 to 5, wherein the positive electrode active material further comprises a second positive electrode active material; and the second positive electrode active material comprises a compound $Li_aA_xMn_{1-y}B_yP_{1-z}C_zO_{4-n}D_n$, wherein A comprises one or more elements of Zn, Al, Na, K, Mg, Nb, Mo, and W; B comprises one or more elements of Ti, V, Zr, Fe, Ni, Mg, Co, Ga, Sn, Sb, Nb, and Ge; C comprises one or more elements of B (boron), S, Si, and N; D comprises one or more elements of S, F, Cl, and Br; a is 0.9 to 1.1; x is 0 to 0.1; y is 0.001 to 0.5; z is 0.001 to 0.1; and n is 0 to 0.1.

7. The positive electrode plate according to claim 6, wherein the second positive electrode active material comprises a core and a shell coating the core, wherein the core comprises the compound $Li_aA_xMn_{1-y}B_yP_{1-z}C_zO_{4-n}D_n$, and the shell comprises carbon element.

8. The positive electrode plate according to claim 6, wherein the second positive electrode active material comprises a core and a shell coating the core, wherein the shell comprises a first coating layer coating the core, a second coating layer coating the first coating layer, and a third coating layer coating the second coating layer; and the core comprises the compound $Li_aA_xMn_{1-y}B_yP_{1-z}C_zO_{4-n}D_n$, wherein the first coating layer comprises crystalline pyrophosphate $Li_gEP_2O_7$ and/or $E_h(P_2O_7)_i$; the second coating layer comprises crystalline phosphate $X_jPO_4$; and the third coating layer comprises carbon element,
wherein E in crystalline pyrophosphate $Li_gEP_2O_7$ and $E_h(P_2O_7)_i$ each independently comprises one or more elements of Fe, Ni, Mg, Co, Cu, Zn, Ti, Ag, Zr, Nb, and Al; X comprises one or more elements of Li, Fe, Ni, Mg, Co, Cu, Zn, Ti, Ag, Zr, Nb, and Al; g is greater than 0 and less than or equal to 2; h is greater than 0 and less than or equal to 4; i is greater than 0 and less than or equal to 3; and j is greater than 0 and less than or equal to 3.

9. The positive electrode plate according to any one of claims 6 to 8, wherein the positive electrode active material consists of the first positive electrode active material and the second positive electrode active material.

10. A battery, comprising the positive electrode plate according to claim 1 or 2.

11. A battery, comprising the positive electrode plate according to any one of claims 3 to 9.

12. The battery according to claim 11, further comprising an electrolyte, wherein the electrolyte comprises an electrolyte salt; and wherein the battery satisfies: $0 < \rho \times m \times b \leq 79.1\%$, wherein $\rho$ is a molar concentration of the electrolyte salt in the electrolyte, measured in mol/L; and m is a mass content of the first positive electrode active material in the positive electrode active material.

13. The battery according to claim 12, wherein the electrolyte salt comprises one or more of $LiPF_6$, $LiBF_4$, $LiN(SO_2F)_2$, $LiN(CF_3SO_2)_2$, $LiClO_4$, $LiAsF_6$, $LiB(C_2O_4)_2$, and $LiBF_2C_2O_4$, optionally one or more of $LiPF_6$, $LiN(SO_2F)_2$, and $LiN(CF_3SO_2)_2$.

14. An electric device, comprising the battery according to any one of claims 10 to 13.

**5**

FIG. 1

**5**

FIG. 2

**4**

FIG. 3

1

FIG. 4

FIG. 5

FIG. 6

## INTERNATIONAL SEARCH REPORT

| International application No. |
| --- |
| **PCT/CN2023/091187** |

| A. | CLASSIFICATION OF SUBJECT MATTER |
| --- | --- |
| | H01M 4/131(2010.01)i |

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 电极, 正极, 阴极, 镍, 铁, 锰, 铝, 重量, 质量, Li, lithium, Ni, nickel, Fe, iron, Mn, manganese, Al, aluminum, wt

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X | JP 2002042816 A (KEE K. K.) 08 February 2002 (2002-02-08) description, paragraphs [0002]-[0027] | 1-14 |
| X | CN 104600273 A (BEIJING GENERAL RESEARCH INSTITUTE FOR NONFERROUS METALS) 06 May 2015 (2015-05-06) description, paragraphs [0002]-[0068] | 1-5, 10-14 |
| X | CN 115632127 A (SHAANXI HONGMA TECHNOLOGY CO., LTD.) 20 January 2023 (2023-01-20) description, paragraphs [0005]-[0065] | 1-5, 10-14 |
| A | CN 110416525 A (SHANGHAI HUAYI (GROUP) CO., LTD.) 05 November 2019 (2019-11-05) entire document | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 September 2023** | **23 November 2023** |

| Name and mailing address of the ISA/CN | Authorized officer |
| --- | --- |
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

# EP 4 636 837 A1

## INTERNATIONAL SEARCH REPORT
### Information on patent family members

International application No.

**PCT/CN2023/091187**

| Patent document cited in search report | | | Publication date (day/month/year) | Patent family member(s) | | | Publication date (day/month/year) |
|---|---|---|---|---|---|---|---|
| JP | 2002042816 | A | 08 February 2002 | None | | | |
| CN | 104600273 | A | 06 May 2015 | CN | 104600273 | B | 26 October 2018 |
| CN | 115632127 | A | 20 January 2023 | None | | | |
| CN | 110416525 | A | 05 November 2019 | CN | 110416525 | B | 27 September 2022 |

Form PCT/ISA/210 (patent family annex) (July 2022)